# EUROPEAN PATENT APPLICATION

(11) **EP 4 838 889 A1**
(43) Date of publication of application: **11.11.2026**
(21) Application number: 25758687.5
(22) Date of filing: 06.02.2025
(51) Int. Cl.: H04N 19/61, H04N 19/11, H04N 19/147, H04N 19/70, H04N 19/86

(54) **IMAGE ENCODING/DECODING METHOD AND DEVICE, AND RECORDING MEDIUM HAVING BITSTREAM STORED THEREIN**

(30) Priority: 23.02.2024 KR 20240026238
(71) Applicant: Hyundai Motor Company, Seoul 06797 (KR); Kia Corporation, Seoul 06797 (KR)
(72) Inventor: CHOI, Jungah, Hwaseong-si Gyeonggi-do 18280 (KR); HEO, Jin, Hwaseong-si Gyeonggi-do 18280 (KR); PARK, Seung Wook, Hwaseong-si Gyeonggi-do 18280 (KR)
(74) Representative: Isarpatent
(86) International application number: PCT/KR2025/099308
(87) International publication number: WO 2025/178438

(57) **Abstract**

Provided are a method and apparatus for encoding/decoding an image, a recording medium for storing a bitstream, and a transmission method. The image decoding method includes deriving a transform kernel determination intra prediction mode of a current block, determining a transform kernel of the current block based on the transform kernel determination intra prediction mode, and performing inverse transform of the current block based on the transform kernel, wherein the transform kernel determination intra prediction mode is derived using a histogram of occurrence (HoC) that is generated based on an intra prediction mode of a neighboring block of the current block, and the HoC may be generated by accumulating the intra prediction mode of the neighboring block.

## Description

### Technical Field

The present disclosure relates to a method and apparatus for encoding/decoding an image and a recording medium for storing a bitstream. Particularly, the present disclosure relates to a method and apparatus for encoding/decoding an image based on a method of determining a transform set and a recording medium for storing a bitstream.

### Background Art

Recently, the demand for high resolution and high quality images such as ultra high definition (UHD) images is increasing in various application fields. In addition, recently, interest in and demand for immersive media such as virtual reality (VR) content, artificial reality (AR) content, and holograms are increasing. In addition, broadcasting of images having characteristics different from those of real images, such as game images, is also increasing. As image data becomes higher in resolution and quality, the amount of data increases relatively compared to existing image data, and thus transmission costs and storage costs increase when image data is transmitted using media such as existing wired or wireless broadband channels or stored using existing storage media. To solve these problems that occur as data becomes higher in resolution and quality, a high-efficiency image encoding/decoding technique is required for images having higher resolution and image quality.

Since transform is conventionally performed based on a transform kernel that does not properly reflect the characteristics of a current block, coding efficiency may be limited.

### Disclosure

### Technical Problem

An object of the present disclosure is to provide a method and apparatus for encoding/decoding an image with improved encoding/decoding efficiency.

Another object of the present disclosure is to provide a recording medium for storing a bitstream generated by a method or apparatus for decoding an image according to the present disclosure.

Another object of the present disclosure is to provide a method of deriving an intra prediction mode for determining a transform kernel and a method of determining a transform kernel, thereby solving the above-described problem.

### Technical Solution

An image decoding method according to an example of the present disclosure includes deriving a transform kernel determination intra prediction mode of a current block, determining a transform kernel of the current block based on the transform kernel determination intra prediction mode, and performing inverse transform of the current block based on the transform kernel, wherein the transform kernel determination intra prediction mode is derived using a histogram of occurrence (HoC) that is generated based on an intra prediction mode of a neighboring block of the current block, and the HoC may be generated by accumulating the intra prediction mode of the neighboring block.

In the image decoding method, the transform kernel determination intra prediction mode may be derived as an intra prediction mode having a maximum value in the HoC.

In the image decoding method, the transform kernel determination intra prediction mode may be derived using a predefined number of intra prediction modes among intra prediction modes of the HoC.

In the image decoding method, the intra prediction mode of the neighboring block may be accumulated in the HoC based on a size of the neighboring block.

In the image decoding method, the determining of the transform kernel of the current block may include determining a transform set of the current block based on the transform kernel determination intra prediction mode, and determining the transform kernel of the current block among transform kernels included in the transform set.

In the image decoding method, the determining of the transform set and the determining of the transform kernel among the transform kernels included in the transform set may be performed simultaneously.

In the image decoding method, the transform set may be a transform set of a non-separable transform.

In the image decoding method, the non-separable transform may be any one of a non-separable primary transform and a non-separable secondary transform.

In the image decoding method, the neighboring block may include a block spatially adjacent to the current block and a block not spatially adjacent to the current block.

In the image decoding method, the block not spatially adjacent to the current block may be included in at least one of a left region of the current block, an upper region of the current block, and an upper-left region of the current block.

An image encoding method according to an example of the present disclosure includes deriving a transform kernel determination intra prediction mode of a current block, determining a transform kernel of the current block based on the transform kernel determination intra prediction mode, and performing transform of the current block based on the transform kernel, wherein the transform kernel determination intra prediction mode is derived using an HoC that is generated based on an intra prediction mode of a neighboring block of the current block, and the HoC may be generated by accumulating the intra prediction mode of the neighboring block.

A non-transitory computer-readable recording medium storing a bitstream generated by an image encoding method according to an example of the present disclosure may store the bitstream generated by the image encoding method.

A bitstream transmission method according to an example of the present disclosure may transmit a bitstream generated by the image encoding method.

The features briefly summarized above with respect to the present disclosure are provided as an example only to explain the detailed description and are not construed to limit the scope of the present disclosure.

### Advantageous Effects

According to the present disclosure, a method and apparatus for encoding/decoding an image with improved encoding/decoding efficiency may be provided.

In addition, according to the present disclosure, a method of deriving an intra prediction mode for determining a transform kernel of a current block may be provided.

In addition, according to the present disclosure, a method of determining a transform kernel for inverse transform of a current block may be provided.

In addition, according to the present disclosure, a suitable transform set and transform kernel may be determined, so that transform efficiency may be improved.

Effects obtainable from the present disclosure are not limited to the above-mentioned effects, and other effects that are not mentioned will be clearly understood by those skilled in the art from the following description.

### Description of Drawings

FIG. 1 is a block diagram showing a configuration of an encoding apparatus to which the present disclosure is applied according to an example.
FIG. 2 is a block diagram showing a configuration of a decoding apparatus to which the present disclosure is applied according to an example.
FIG. 3 is a diagram schematically showing a video coding system to which the present disclosure is applicable.
FIG. 4 is a view for describing a neighboring block of a current block according to an example of the present disclosure.
FIG. 5 is a flowchart for describing a method of determining a transform kernel according to an example of the present disclosure.
FIG. 6 is a view exemplarily showing a content streaming system to which an example according to the present disclosure is applicable.

### Best Mode

An image decoding method according to an example of the present disclosure includes deriving a transform kernel determination intra prediction mode of a current block, determining a transform kernel of the current block based on the transform kernel determination intra prediction mode, and performing inverse transform of the current block based on the transform kernel, wherein the transform kernel determination intra prediction mode is derived using an HoC that is generated based on an intra prediction mode of a neighboring block of the current block, and the HoC may be generated by accumulating the intra prediction mode of the neighboring block.

### Mode for Invention

The present disclosure may have various modifications and examples, and specific examples are illustrated in the drawings and described in detail in the detailed description. However, this is not intended to limit the present disclosure to specific examples, but should be understood to include all modifications, equivalents, or substitutes included in the spirit and technical scope of the present disclosure. Similar reference numerals in the drawings indicate the same or similar functions throughout various aspects. The shapes and sizes of elements in the drawings may be provided by way of example for a clearer description. The detailed description of the exemplary examples described below refers to the accompanying drawings, which illustrate specific examples by way of example. These examples are described in sufficient detail to enable those skilled in the art to practice the examples. It should be understood that the various examples are different from each other, but are not necessarily mutually exclusive. For example, specific shapes, structures, and characteristics described herein may be implemented in other examples without departing from the spirit and scope of the present disclosure with respect to one example. It should also be understood that the positions or arrangements of individual components within each disclosed example may be changed without departing from the spirit and scope of the example. Accordingly, the detailed description set forth below is not intended to be limiting, and the scope of the exemplary examples is defined only by the appended claims, along with the full scope of equivalents to which such claims are entitled, if properly described.

In the present disclosure, the terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term is and/or includes a combination of a plurality of related described items or any item among a plurality of related described items.

The components shown in the examples of the present disclosure are independently depicted to indicate different characteristic functions, and do not mean that each component is formed as a separate hardware or software configuration unit. That is, each component is listed and included as a separate component for convenience of explanation, and at least two of the components may be combined to form a single component, or one component may be divided into plurality of components to perform a function, and examples in which components are integrated and examples in which each component is divided are also included in the scope of the present disclosure as long as they do not deviate from the essence of the present disclosure.

The terminology used in the present disclosure is only used to describe specific examples and is not intended to limit the present disclosure. The singular expression includes the plural expression unless the context clearly indicates otherwise. In addition, some components of the present disclosure are not essential components that perform essential functions in the present disclosure and may be optional components only for improving performance. The present disclosure may be implemented by including only essential components for implementing the essence of the present disclosure excluding components only used for improving performance, and a structure including only essential components excluding optional components only used for improving performance is also included in the scope of the present disclosure.

In an example, the term "at least one" may mean one of a number greater than or equal to 1, such as 1, 2, 3, and 4. In an example, the term "a plurality of" may mean one of a number greater than or equal to 2, such as 2, 3, and 4.

Hereinafter, examples of the present disclosure will be specifically described with reference to the drawings. In describing the examples of this specification, if it is determined that a detailed description of a related known configuration or function may obscure the subject matter of this specification, the detailed description will be omitted, and the same reference numerals will be used for the same components in the drawings, and repeated descriptions of the same components will be omitted.

### Description of terms

Hereinafter, "image" may mean one picture constituting a video, and may also refer to the video itself. For example, "encoding and/or decoding of an image" may mean "encoding and/or decoding of a video," and may also mean "encoding and/or decoding of one of images constituting the video."

Hereinafter, "moving image" and "video" may be used with the same meaning and may be used interchangeably. In addition, a target image may be an encoding target image that is a target of encoding and/or a decoding target image that is a target of decoding. In addition, the target image may be an input image input to an encoding apparatus and may be an input image input to a decoding apparatus. Here, the target image may have the same meaning as a current image.

Hereinafter, encoder and image encoding apparatus may be used with the same meaning and may be used interchangeably.

Hereinafter, decoder and image decoding apparatus may be used with the same meaning and may be used interchangeably.

Hereinafter, "image", "picture", "frame" and "screen" may be used with the same meaning and may be used interchangeably.

Hereinafter, a "target block" may be an encoding target block that is a target of encoding and/or a decoding target block that is a target of decoding. In addition, the target block may be a current block that is a target of current encoding and/or decoding. For example, "target block" and "current block" may be used with the same meaning and may be used interchangeably.

Hereinafter, "block" and "unit" may be used with the same meaning and may be used interchangeably. In addition, "unit" may mean including a luma component block and a chroma component block corresponding thereto in order to distinguish it from a block. For example, a coding tree unit (CTU) may be composed of one luma component (Y) coding tree block (CTB) and two chroma component (Cb, Cr) coding tree blocks related to it.

Hereinafter, "sample", "picture element" and "pixel" may be used with the same meaning and may be used interchangeably. Herein, a sample may represent a basic unit that constitutes a block.

Hereinafter, "inter" and "inter-screen" may be used with the same meaning and can be used interchangeably.

Hereinafter, "intra" and "in-screen" may be used with the same meaning and can be used interchangeably.

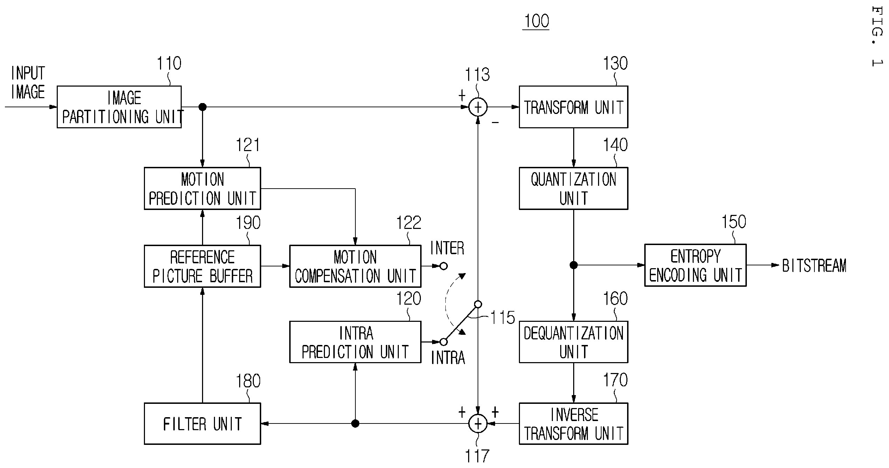

FIG. 1 is a block diagram showing a configuration of an encoding apparatus according to an example of the present disclosure.

The encoding apparatus 100 may be an encoder, a video encoding apparatus, or an image encoding apparatus. A video may include one or more images. The encoding apparatus 100 may sequentially encode one or more images.

Referring to FIG. 1, the encoding apparatus 100 may include an image partitioning unit 110, an intra prediction unit 120, a motion prediction unit 121, a motion compensation unit 122, a switch 115, a subtractor 113, a transform unit 130, a quantization unit 140, an entropy encoding unit 150, a dequantization unit 160, an inverse transform unit 170, an adder 117, a filter unit 180 and a reference picture buffer 190.

In addition, the encoding apparatus 100 may generate a bitstream including information encoded through encoding of an input image, and output the generated bitstream. The generated bitstream may be stored in a computer-readable recording medium, or may be streamed through a wired/wireless transmission medium.

The image partitioning unit 110 may partition the input image into various forms to increase the efficiency of video encoding/decoding. That is, the input video is composed of plurality of pictures, and one picture may be hierarchically partitioned and processed for compression efficiency, parallel processing, etc. For example, one picture may be partitioned into one or plurality of tiles or slices, and then partitioned again into plurality of CTUs (Coding Tree Units). Alternatively, one picture may first be partitioned into plurality of sub-pictures defined as groups of rectangular slices, and each sub-picture may be partitioned into the tiles/slices. Here, the sub-picture may be utilized to support the function of partially independently encoding/decoding and transmitting the picture. Since plurality of sub-pictures may be individually reconstructed, it has the advantage of easy editing in applications that configure multichannel inputs into one picture. In addition, a tile may be divided horizontally to generate bricks. Here, the brick may be utilized as the basic unit of parallel processing within the picture. In addition, one CTU may be recursively partitioned into quad trees (QTs), and the terminal node of the partition may be defined as a CU (Coding Unit). The CU may be partitioned into a PU (Prediction Unit), which is a prediction unit, and a TU (Transform Unit), which is a transform unit, to perform prediction and partition. Meanwhile, the CU may be utilized as the prediction unit and/or the transform unit itself. Here, for flexible partition, each CTU may be recursively partitioned into multi-type trees (MTTs) as well as quad trees (QTs). The partition of the CTU into multi-type trees may start from the terminal node of the QT, and the MTT may be composed of a binary tree (BT) and a triple tree (TT). For example, the MTT structure may be classified into a vertical binary split mode (SPLIT_BT_VER), a horizontal binary split mode (SPLIT_BT_HOR), a vertical ternary split mode (SPLIT_TT_VER), and a horizontal ternary split mode (SPLIT_TT_HOR). In addition, a minimum block size (MinQTSize) of the quad tree of the luma block during partition may be set to 16x16, a maximum block size (MaxBtSize) of the binary tree may be set to 128x128, and a maximum block size (MaxTtSize) of the triple tree may be set to 64x64. In addition, a minimum block size (MinBtSize) of the binary tree and a minimum block size (MinTtSize) of the triple tree may be specified as 4x4, and the maximum depth (MaxMttDepth) of the multi-type tree may be specified as 4. In addition, in order to increase the encoding efficiency of the I slice, a dual tree that differently uses CTU partition structures of luma and chroma components may be applied. On the other hand, in P and B slices, the luma and chroma CTBs (Coding Tree Blocks) within the CTU may be partitioned into a single tree that shares the coding tree structure.

The encoding apparatus 100 may perform encoding on the input image in the intra mode and/or the inter mode. Alternatively, the encoding apparatus 100 may perform encoding on the input image in a third mode (e.g., IBC mode, Palette mode, etc.) other than the intra mode and the inter mode. However, if the third mode has functional characteristics similar to the intra mode or the inter mode, it may be classified as the intra mode or the inter mode for convenience of explanation. In the present disclosure, the third mode will be classified and described separately only when a specific description thereof is required.

When the intra mode is used as the prediction mode, the switch 115 may be switched to intra, and when the inter mode is used as the prediction mode, the switch 115 may be switched to inter. Here, the intra mode may mean an intra prediction mode, and the inter mode may mean an inter prediction mode. The encoding apparatus 100 may generate a prediction block for an input block of the input image. In addition, the encoding apparatus 100 may encode a residual block using a residual of the input block and the prediction block after the prediction block is generated. The input image may be referred to as a current image which is a current encoding target. The input block may be referred to as a current block which is a current encoding target or an encoding target block.

When a prediction mode is an intra mode, the intra prediction unit 120 may use a sample of a block that has been already encoded/decoded around a current block as a reference sample. The intra prediction unit 120 may perform spatial prediction for the current block by using the reference sample, or generate prediction samples of an input block through spatial prediction. Herein, the intra prediction may mean in-screen prediction.

As an intra prediction method, non-directional prediction modes such as DC mode and Planar mode and directional prediction modes (e.g., 65 directions) may be applied. Here, the intra prediction method may be expressed as an intra prediction mode or an in-screen prediction mode.

When a prediction mode is an inter mode, the motion prediction unit 121 may retrieve a region that best matches with an input block from a reference image in a motion prediction process, and derive a motion vector by using the retrieved region. In this case, a search region may be used as the region. The reference image may be stored in the reference picture buffer 190. Here, when encoding/decoding for the reference image is performed, it may be stored in the reference picture buffer 190.

The motion compensation unit 122 may generate a prediction block of the current block by performing motion compensation using a motion vector. Herein, inter prediction may mean inter-screen prediction or motion compensation.

When the value of the motion vector is not an integer, the motion prediction unit 121 and the motion compensation unit 122 may generate the prediction block by applying an interpolation filter to a partial region of the reference picture. In order to perform inter prediction or motion compensation, it may be determined whether the motion prediction and motion compensation mode of the prediction unit included in the coding unit is one of a skip mode, a merge mode, an advanced motion vector prediction (AMVP) mode, and an intra block copy (IBC) mode based on the coding unit and inter prediction or motion compensation may be performed according to each mode.

In addition, based on the above inter prediction method, an AFFINE mode of sub-PU based prediction, an SbTMVP (Subblock-based Temporal Motion Vector Prediction) mode, an MMVD (Merge with MVD) mode of PU-based prediction, and a GPM (Geometric Partitioning Mode) mode may be applied. In addition, in order to improve the performance of each mode, HMVP (History based MVP), PAMVP (Pairwise Average MVP), CIIP (Combined Intra/Inter Prediction), AMVR (Adaptive Motion Vector Resolution), BDOF (Bi-Directional Optical-Flow), BCW (Bi-predictive with CU Weights), LIC (Local Illumination Compensation), TM (Template Matching), OBMC (Overlapped Block Motion Compensation), etc. may be applied.

Among these, the AFFINE mode is a technology that is used in both AMVP and MERGE modes and also has high encoding efficiency. In the existing video coding standard, since MC (Motion Compensation) is performed by considering only the parallel movement of blocks, it has a disadvantage in that it cannot properly compensate for motions that occur in reality, such as zoom-in/out and rotation. To supplement this, a four-parameter affine motion model using two control point motion vectors (CPMVs) and a six-parameter affine motion model using three control point motion vectors may be used and applied to inter prediction. Here, CPMV is a vector representing the affine motion model of one of the upper left, upper right, and lower left of the current block.

The subtractor 113 may generate a residual block by using a difference between an input block and a prediction block. The residual block may be called a residual signal. The residual signal may mean a difference between an original signal and a prediction signal. Alternatively, the residual signal may be a signal generated by transforming or quantizing, or transforming and quantizing a difference between the original signal and the prediction signal. The residual block may be a residual signal of a block unit.

The transform unit 130 may generate a transform coefficient by performing transform on a residual block, and output the generated transform coefficient. Herein, the transform coefficient may be a coefficient value generated by performing transform on the residual block. When a transform skip mode is applied, the transform unit 130 may skip transform of the residual block.

A quantized level may be generated by applying quantization to the transform coefficient or to the residual signal. Hereinafter, the quantized level may also be called a transform coefficient in examples.

For example, a 4x4 luma residual block generated through intra prediction is transformed using a base vector based on DST (Discrete Sine Transform), and transform may be performed on the remaining residual block using a base vector based on DCT (Discrete Cosine Transform). In addition, a transform block is partitioned into a quad tree shape for one block using RQT (Residual Quad Tree) technology, and after performing transform and quantization on each transformed block partitioned through RQT, a coded block flag (cbf) may be transmitted to increase encoding efficiency when all coefficients become 0.

As another alternative, the Plurality of Transform Selection (MTS) technique, which selectively uses plurality of transform bases to perform transform, may be applied. That is, instead of partitioning a CU into TUs through RQT, a function similar to TU partition may be performed through the sub-block Transform (SBT) technique. Specifically, SBT is applied only to inter prediction blocks, and unlike RQT, the current block may be partitioned into ½ or ¼ sizes in the vertical or horizontal direction and then transform may be performed on only one of the blocks. For example, if it is partitioned vertically, transform may be performed on the leftmost or rightmost block, and if it is partitioned horizontally, transform may be performed on the topmost or bottommost block.

In addition, LFNST (Low Frequency Non-Separable Transform), a secondary transform technique that additionally transforms the residual signal transformed into the frequency domain through DCT or DST, may be applied. LFNST additionally performs transform on the low-frequency region of 4x4 or 8x8 in the upper left, so that the residual coefficients may be concentrated in the upper left.

The quantization unit 140 may generate a quantized level by quantizing the transform coefficient or the residual signal according to a quantization parameter (QP), and output the generated quantized level. Herein, the quantization unit 140 may quantize the transform coefficient by using a quantization matrix.

For example, a quantizer using QP values of 0 to 51 may be used. Alternatively, if the image size is larger and high encoding efficiency is required, the QP of 0 to 63 may be used. Also, a DQ (Dependent Quantization) method using two quantizers instead of one quantizer may be applied. DQ performs quantization using two quantizers (e.g., Q0 and Q1), but even without signaling information about the use of a specific quantizer, the quantizer to be used for the next transform coefficient may be selected based on the current state through a state transition model.

The entropy encoding unit 150 may generate a bitstream by performing entropy encoding according to a probability distribution on values calculated by the quantization unit 140 or on coding parameter values calculated when performing encoding, and output the bitstream. The entropy encoding unit 150 may perform entropy encoding of information on a sample of an image and information for decoding an image. For example, the information for decoding the image may include a syntax element.

When entropy encoding is applied, symbols are represented so that a smaller number of bits are assigned to a symbol having a high occurrence probability and a larger number of bits are assigned to a symbol having a low occurrence probability, and thus, the size of bit stream for symbols to be encoded may be decreased. The entropy encoding unit 150 may use an encoding method, such as exponential Golomb, context-adaptive variable length coding (CAVLC), context-adaptive binary arithmetic coding (CABAC), etc., for entropy encoding. For example, the entropy encoding unit 150 may perform entropy encoding by using a variable length coding/code (VLC) table. In addition, the entropy encoding unit 150 may derive a binarization method of a target symbol and a probability model of a target symbol/bin, and perform arithmetic coding by using the derived binarization method, and a context model.

In relation to this, when applying CABAC, in order to reduce the size of the probability table stored in the decoding apparatus, a table probability update method may be changed to a table update method using a simple equation and applied. In addition, two different probability models may be used to obtain more accurate symbol probability values.

In order to encode a transform coefficient level (quantized level), the entropy encoding unit 150 may change a two-dimensional block form coefficient into a one-dimensional vector form through a transform coefficient scanning method.

A coding parameter may include information (flag, index, etc.) encoded in the encoding apparatus 100 and signaled to the decoding apparatus 200, such as syntax element, and information derived in the encoding or decoding process, and may mean information required when encoding or decoding an image.

Herein, signaling the flag or index may mean that a corresponding flag or index is entropy encoded and included in a bitstream in an encoder, and may mean that the corresponding flag or index is entropy decoded from a bitstream in a decoder.

The encoded current image may be used as a reference image for another image to be processed later. Therefore, the encoding apparatus 100 may reconstruct or decode the encoded current image again and store the reconstructed or decoded image as a reference image in the reference picture buffer 190.

A quantized level may be dequantized in the dequantization unit 160, or may be inversely transformed in the inverse transform unit 170. A dequantized and/or inversely transformed coefficient may be added with a prediction block through the adder 117. Herein, the dequantized and/or inversely transformed coefficient may mean a coefficient on which at least one of dequantization and inverse transform is performed, and may mean a reconstructed residual block. The dequantization unit 160 and the inverse transform unit 170 may be performed as an inverse process of the quantization unit 140 and the transform unit 130.

The reconstructed block may pass through the filter unit 180. The filter unit 180 may apply all or some filtering techniques among a deblocking filter, a sample adaptive offset (SAO), an adaptive loop filter (ALF), a bilateral filter (BIF), luma mapping with chroma scaling (LMCS), etc. to a reconstructed sample, a reconstructed block or a reconstructed image. The filter unit 180 may be called an in-loop filter. In this case, the in-loop filter is also used as name excluding LMCS.

The deblocking filter may remove block distortion generated in boundaries between blocks. In order to determine whether or not to apply a deblocking filter, whether or not to apply a deblocking filter to a current block may be determined based on samples included in several rows or columns which are included in the block. When a deblocking filter is applied to a block, a different filter may be applied according to a required deblocking filtering strength.

In order to compensate for encoding error using sample adaptive offset, a proper offset value may be added to a sample value. The sample adaptive offset may correct an offset of a deblocked image from an original image by a sample unit. A method of partitioning a sample included in an image into a predetermined number of regions, determining a region to which an offset is applied, and applying the offset to the determined region, or a method of applying an offset in consideration of edge information on each sample may be used.

A bilateral filter (BIF) may also correct the offset from the original image on a sample-by-sample basis for the image on which deblocking has been performed.

The adaptive loop filter may perform filtering based on a comparison result of the reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the adaptive loop filter to be applied to each block may vary.

In LMCS (Luma Mapping with Chroma Scaling), luma mapping (LM) means remapping luma values through a piece-wise linear model, and chroma scaling (CS) means a technique for scaling the residual value of the chroma component according to the average luma value of the prediction signal. In particular, LMCS may be utilized as an HDR correction technique that reflects the characteristics of HDR (High Dynamic Range) images.

The reconstructed block or the reconstructed image having passed through the filter unit 180 may be stored in the reference picture buffer 190. A reconstructed block that has passed through the filter unit 180 may be a part of a reference image. That is, the reference image is a reconstructed image composed of reconstructed blocks that have passed through the filter unit 180. The stored reference image may be used later in inter prediction or motion compensation.

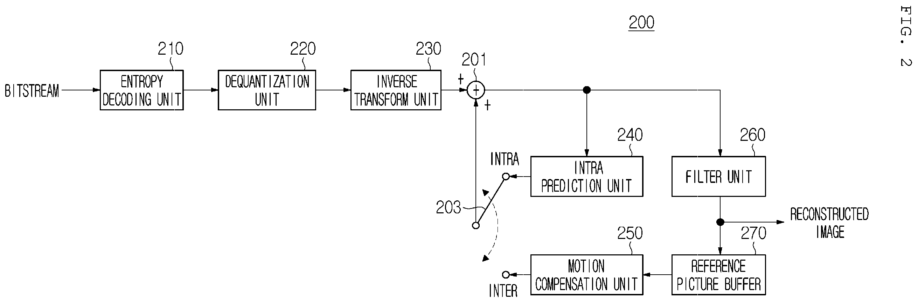

FIG. 2 is a block diagram showing a configuration of a decoding apparatus according to an example of the present disclosure.

A decoding apparatus 200 may a decoder, a video decoding apparatus, or an image decoding apparatus.

Referring to FIG. 2, the decoding apparatus 200 may include an entropy decoding unit 210, a dequantization unit 220, an inverse transform unit 230, an intra prediction unit 240, a motion compensation unit 250, an adder 201, a switch 203, a filter unit 260, and a reference picture buffer 270.

The decoding apparatus 200 may receive a bitstream output from the encoding apparatus 100. The decoding apparatus 200 may receive a bitstream stored in a computer-readable recording medium, or may receive a bitstream that is streamed through a wired/wireless transmission medium. The decoding apparatus 200 may decode the bitstream in an intra mode or an inter mode. In addition, the decoding apparatus 200 may generate a reconstructed image generated through decoding or a decoded image, and output the reconstructed image or decoded image.

When a prediction mode used for decoding is an intra mode, the switch 203 may be switched to intra. Alternatively, when a prediction mode used for decoding is an inter mode, the switch 203 may be switched to inter.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block and the prediction block. The decoding target block may be called a current block.

The entropy decoding unit 210 may generate symbols by entropy decoding the bitstream according to a probability distribution. The generated symbols may include a symbol of a quantized level form. Herein, an entropy decoding method may be an inverse process of the entropy encoding method described above.

The entropy decoding unit 210 may change a one-dimensional vector-shaped coefficient into a two-dimensional block-shaped coefficient through a transform coefficient scanning method to decode a transform coefficient level (quantized level).

A quantized level may be dequantized in the dequantization unit 220, or inversely transformed in the inverse transform unit 230. The quantized level may be a result of dequantization and/or inverse transform, and may be generated as a reconstructed residual block. Herein, the dequantization unit 220 may apply a quantization matrix to the quantized level. The dequantization unit 220 and the inverse transform unit 230 applied to the decoding apparatus may apply the same technology as the dequantization unit 160 and inverse transform unit 170 applied to the aforementioned encoding apparatus.

When an intra mode is used, the intra prediction unit 240 may generate a prediction block by performing, on the current block, spatial prediction that uses a sample value of a block which has been already decoded around a decoding target block. The intra prediction unit 240 applied to the decoding apparatus may apply the same technology as the intra prediction unit 120 applied to the aforementioned encoding apparatus.

When an inter mode is used, the motion compensation unit 250 may generate a prediction block by performing, on the current block, motion compensation that uses a motion vector and a reference image stored in the reference picture buffer 270. The motion compensation unit 250 may generate a prediction block by applying an interpolation filter to a partial region within a reference image when the value of the motion vector is not an integer value. In order to perform motion compensation, it may be determined whether the motion compensation method of the prediction unit included in the corresponding coding unit is a skip mode, a merge mode, an AMVP mode, or a current picture reference mode based on the coding unit, and motion compensation may be performed according to each mode. The motion compensation unit 250 applied to the decoding apparatus may apply the same technology as the motion compensation unit 122 applied to the encoding apparatus described above.

The adder 201 may generate a reconstructed block by adding the reconstructed residual block and the prediction block. The filter unit 260 may apply at least one of inverse-LMCS, a deblocking filter, a sample adaptive offset, and an adaptive loop filter to the reconstructed block or reconstructed image. The filter unit 260 applied to the decoding apparatus may apply the same filtering technology as that applied to the filter unit 180 applied to the aforementioned encoding apparatus.

The filter unit 260 may output the reconstructed image. The reconstructed block or reconstructed image may be stored in the reference picture buffer 270 and used for inter prediction. A reconstructed block that has passed through the filter unit 260 may be a part of a reference image. That is, a reference image may be a reconstructed image composed of reconstructed blocks that have passed through the filter unit 260. The stored reference image may be used later in inter prediction or motion compensation.

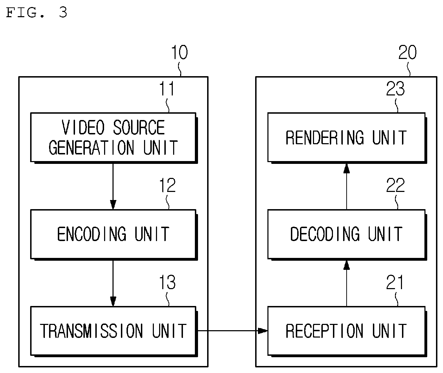

FIG. 3 is a diagram schematically showing a video coding system to which the present disclosure is applicable.

A video coding system according to an example may include an encoding apparatus 10 and a decoding apparatus 20. The encoding apparatus 10 may transmit encoded video and/or image information or data to the decoding apparatus 20 in the form of a file or streaming through a digital storage medium or a network.

The encoding apparatus 10 according to an example may include a video source generation unit 11, an encoding unit 12, and a transmission unit 13. The decoding apparatus 20 according to an example may include a reception unit 21, a decoding unit 22, and a rendering unit 23. The encoding unit 12 may be called a video/image encoding unit, and the decoding unit 22 may be called a video/image decoding unit. The transmission unit 13 may be included in the encoding unit 12. The reception unit 21 may be included in the decoding unit 22. The rendering unit 23 may include a display unit, and the display unit may be configured as a separate device or an external component.

The video source generation unit 11 may obtain the video/image through a process of capturing, synthesizing, or generating the video/image. The video source generation unit 11 may include a video/image capture device and/or a video/image generation device. The video/image capture device may include, for example, one or more cameras, a video/image archive including previously captured video/image, etc. The video/image generation device may include, for example, a computer, a tablet, and a smartphone, etc., and may (electronically) generate the video/image. For example, a virtual video/image may be generated through a computer, etc., in which case the video/image capture process may be replaced with a process of generating related data.

The encoding unit 12 may encode the input video/image. The encoding unit 12 may perform a series of procedures such as prediction, transform, and quantization for compression and encoding efficiency. The encoding unit 12 may output encoded data (encoded video/image information) in the form of a bitstream. The detailed configuration of the encoding unit 12 may also be configured in the same manner as the encoding apparatus 100 of FIG. 1 described above.

The transmission unit 13 may transmit encoded video/image information or data output in the form of a bitstream to the reception unit 21 of the decoding apparatus 20 through a digital storage medium or a network in the form of a file or streaming. The digital storage medium may include various storage media such as USB, SD, CD, DVD, Blu-ray, HDD, SSD, etc. The transmission unit 13 may include an element for generating a media file through a predetermined file format and may include an element for transmission through a broadcasting/communication network. The reception unit 21 may extract/receive the bitstream from the storage medium or the network and transmit it to the decoding unit 22.

The decoding unit 22 may decode the video/image by performing a series of procedures such as dequantization, inverse transform, and prediction corresponding to the operation of the encoding unit 12. The detailed configuration of the decoding unit 22 may also be configured in the same manner as the above-described decoding apparatus 200 of FIG. 2.

The rendering unit 23 may render the decoded video/image. The rendered video/image may be displayed through the display unit.

In the present specification, a transform kernel may mean a transform core that is used when a transform is applied from a spatial domain to a frequency domain. In addition, a transform set may mean a group including the transform kernel. In addition, a transform set may mean a kernel cluster.

A secondary transform may mean a transform that is performed based on a correlation of primary transform coefficients generated by a primary transform, after the primary transform from the spatial domain to the frequency domain is performed. Here, the primary transform and a main transform may have the same meaning. By performing the secondary transform that is a transform into a more compressed representation than the primary transform, higher-performance compression efficiency may be achieved than when only the primary transform is performed.

The primary transform and the secondary transform may be performed as a separable transform or a non-separable transform.

A separable transform may mean a transform in which a vertical transform and a horizontal transform are independently performed. Here, the vertical transform means a transform in a vertical direction and is a transform to which a vertical transform kernel is applied. In addition, the horizontal transform means a transform in a horizontal direction and is a transform to which a horizontal transform kernel is applied. For example, in the separable transform, a transform in the horizontal direction may be performed and then a transform in the vertical direction may be performed. Alternatively, a transform in the vertical direction may be performed and then a transform in the horizontal direction may be performed.

A non-separable transform may mean that a transform is performed at once, not in the horizontal direction and the vertical direction, using a non-separable transform kernel in the form of a matrix.

In the separable transform and the non-separable transform, a basis vector or a combination of basis vectors may be used. The basis vector is a vector having a size corresponding to a pixel of a two-dimensional space in which a transform is performed or a vector having a size corresponding to a coefficient, and may be designed in consideration of overall characteristics and similarity of pixels and/or coefficients in the two-dimensional space in which the transform is performed.

In the case of a secondary transform such as a low frequency non-separable transform (LFNST), non-separable secondary transform kernels (non-separable kernels) of various sizes may be used in consideration of coding efficiency improvement and transform complexity for specific input block sizes.

In the case of a non-separable primary transform (NSPT), although it is a primary transform, similar to the LFNST, non-separable primary transform kernels of various sizes may be used in consideration of coding efficiency improvement and transform complexity for specific input block sizes.

Plurality of transform selection (MTS) may mean using a transform kernel selected from among a plurality of transform kernels for a transform of a current block.

Plurality of transform set selection (MTSS) may mean that a transform set is selected from among a plurality of transform sets, and a transform kernel selected from among a plurality of transform kernels included in the selected transform set is used for a transform of a current block. In this case, the transform kernel may be selected after the transform set is selected, or the selection of the transform set and the selection of the transform kernel may be performed simultaneously.

For high compression performance, it is important to select a transform set and/or a transform kernel suitable for characteristics of pixels and/or coefficients to be coded. Conventionally, a transform set and/or a transform kernel is determined based on an intra prediction mode of a block on which a transform is performed. In this case, information on an intra prediction mode of a current block may not be beneficial to the performance of a transform technique and a coding structure. As a result, a transform set and/or a transform kernel suitable for the characteristics of the pixels and/or coefficients to be coded is not selected, so that transform efficiency may be limited.

Hereinafter, the present specification provides a method of efficiently deriving a virtual intra prediction mode for determining a transform set and/or a transform kernel. Here, the method of deriving the virtual intra prediction mode may mean a method of deriving an intra prediction mode used when determining a transform set for a transform/inverse transform of a current block from among a plurality of transform sets. In addition, it may mean a method of deriving an intra prediction mode used when determining a transform kernel for a transform/inverse transform of a current block from among a plurality of transform kernels.

Meanwhile, in the present specification, a virtual intra prediction mode for determining a transform set and/or a transform kernel and a transform kernel determination intra prediction mode may have the same meaning.

When information on an intra prediction mode of a current block is not beneficial to the performance of a transform technique and a coding structure, a transform kernel determination intra prediction mode may be derived and used for determining a transform set and/or a transform kernel.

In addition, even when prediction is performed on the current block by another method, rather than based on an existing directional intra prediction mode and a non-directional intra prediction mode, the transform kernel determination intra prediction mode may be derived.

Meanwhile, the above-described other methods may include a decoder side intra mode derivation (DIMD) method, a template-based intra mode derivation (TIMD) method, an intra template matching prediction (intraTMP) method, a combined intra-inter prediction (CIIP) method, a spatial CIIP (spatial combined intra-intra prediction, SCIIP) method, a spatial geometric prediction mode (SGPM) method, an extrapolation-based intra prediction (EIP) method, a matrix-based intra prediction (MIP) method, an intra block copy (IBC) method, a merged histogram of gradients (MHog) method, an occurrence-based intra coding (OBIC) method, and the like.

Here, the DIMD method may mean a method in which an intra prediction mode is derived at the decoder side, and the TIMD may mean a method in which a prediction mode of the current block is derived using a reference region of a template. The IntraTMP may mean a method of performing intra prediction using template matching. In addition, the CIIP may mean a method in which prediction is performed by adding weights to intra prediction and inter prediction, and the SCIIP may mean using a plurality of intra prediction methods. In addition, the SGPM may mean a method of performing prediction by partitioning a block. In addition, the EIP may mean a method of performing prediction using extrapolation, and the MIP may mean a method of performing prediction using a weight matrix. In addition, the IBC may mean a method of performing prediction using a block vector, and the MHog may mean a method of combining histograms of gradients of neighboring blocks. In addition, the OBIC may mean a method of using an occurrence rate histogram.

In addition, the above-described other methods may include a case in which inter prediction is performed on the current block. In addition, a case in which prediction is performed by fusing two or more intra prediction methods on the current block may also be included. In addition, a case in which prediction is performed by fusing two or more inter prediction methods on the current block may also be included. In addition, a case in which prediction is performed by fusing an intra prediction method and an inter prediction method on the current block may also be included.

In addition, even when the current block is divided into a plurality of sub-blocks, the transform kernel determination intra prediction mode may be derived. In this case, a transform kernel determination intra prediction mode for a transform of some of the sub-blocks of the current block may be derived, or a transform kernel determination intra prediction mode for a transform of all of the sub-blocks of the current block may be derived.

Meanwhile, in the present disclosure, a transform set may include a transform set of a primary transform and a transform set of a secondary transform. In addition, the transform set may include a transform set of a separable transform and a transform set of a non-separable transform.

Meanwhile, in the present disclosure, a transform kernel may include a transform kernel used for a primary transform and a transform kernel used for a secondary transform. In addition, the transform kernel may include a transform kernel used for a separable transform and a transform kernel used for a non-separable transform.

According to an example of the present disclosure, a transform kernel determination intra prediction mode may be derived using a histogram of occurrence (HoC). Therefore, when the transform kernel determination intra prediction mode is derived by the HoC, a transform kernel is determined based on the transform kernel determination intra prediction mode, and a transform/inverse transform may be performed based on the transform kernel.

Meanwhile, in the present example, the HoC may have the same meaning as an occurrence rate histogram.

Meanwhile, the method of deriving the transform kernel determination intra prediction mode according to the present example may be referred to as an occurrence-based intra coding (OBIC) method. Here, the OBIC method may mean a method of deriving an intra prediction mode of a current block based on an occurrence frequency of an intra prediction mode of a neighboring block.

The HoC may be generated based on an intra prediction mode of a neighboring block of a current block on which a transform/inverse transform is performed. Specifically, the HoC may be generated by accumulating the intra prediction mode of the neighboring block.

Here, in order to generate the HoC, the intra prediction mode of the neighboring block may be accumulated as it is.

Alternatively, in order to generate the HoC, the intra prediction mode of the neighboring block may be accumulated based on a size of the neighboring block.

As an example, the intra prediction mode of the neighboring block may be accumulated in proportion to a size of the neighboring block. That is, a value calculated by multiplying the size of the neighboring block by an arbitrary real number may be accumulated in the HoC. Here, the arbitrary real number may be determined by an agreement between an encoder and a decoder.

Meanwhile, the size of the neighboring block may be determined by at least one of a width and a height of the neighboring block. As an example, the size of the neighboring block may mean a value obtained by multiplying the width and the height of the neighboring block. As another example, the intra prediction mode of the neighboring block may be accumulated in the HoC based on at least one of the width and the height of the neighboring block.

Meanwhile, the size of the neighboring block may be determined by the number of pixels included in the neighboring block. As an example, an intra prediction mode of the neighboring block may be accumulated in proportion to the number of pixels included in the neighboring block. Specifically, a value calculated by multiplying the number of pixels included in the neighboring block by a predetermined real number may be accumulated in the HoC. Here, the predetermined real number may be defined by an agreement between the encoder and the decoder.

Meanwhile, the number of pixels included in the neighboring block and the number of samples of the neighboring block may have the same meaning. As an example, the intra prediction mode of the neighboring block may be accumulated in proportion to the number of samples of the neighboring block.

Meanwhile, in the present example, the neighboring block may include an adjacent neighboring block adjacent to the current block and a non-adjacent neighboring block not adjacent to the current block. Here, being adjacent to the current block may mean being spatially adjacent to the current block.

Here, a neighboring block adjacent to the current block may be referred to as an adjacent block, and a neighboring block not adjacent to the current block may be referred to as a non-adjacent block.

Therefore, the HoC may be generated using intra prediction modes of an adjacent block and a non-adjacent block.

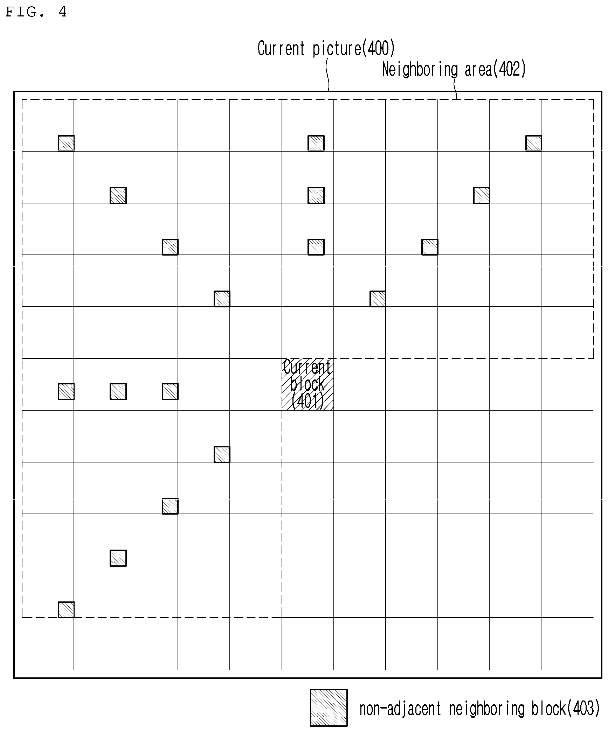

FIG. 4 is a view for describing a neighboring block of a current block according to an example of the present disclosure. Specifically, FIG. 4 is a view for describing a non-adjacent block among neighboring blocks of the current block.

Referring to FIG. 4, a predetermined region around a current block 401 in a current picture 400 may be defined as a neighboring area 402. In addition, a block that is not spatially adjacent to the current block but is included in the neighboring area may be defined as a non-adjacent neighboring block 403.

In addition, the transform kernel determination intra prediction mode of the current block may be derived based on the non-adjacent neighboring block 403. As an example, an HoC may be generated by accumulating an intra prediction mode of the non-adjacent block 403, and the transform kernel determination intra prediction mode may be derived based on the HoC.

Meanwhile, in FIG. 4, the neighboring area including the non-adjacent block 403 is a left region, an upper-left region, and an upper region of the current block, but this is only one example, and the non-adjacent block 403 may be included in a preset region. In this case, the preset region may be any one region among a current tile, a current slice, and a current picture including the current block.

Meanwhile, in FIG. 4, a position of a non-adjacent block is only one example, and the position of the non-adjacent block may be an arbitrary position of the neighboring area. The position of the non-adjacent block may be determined by an agreement between an encoder and a decoder. In addition, information on the position of the non-adjacent block may be determined by the encoder and may be transmitted to the decoder. In addition, the position of the non-adjacent block may be indicated by information on the current block.

When the HoC is generated, a transform kernel determination intra prediction mode may be derived based on the generated HoC.

As an example, the transform kernel determination intra prediction mode may be derived as an intra prediction mode having a largest value in the HoC. Here, having the largest value means having a largest amplitude in the histogram and may mean being most accumulated.

As another example, a transform kernel determination intra prediction mode may be derived using N intra prediction modes that are most accumulated among intra prediction modes of the HoC. Specifically, the transform kernel determination intra prediction mode may be derived as any one of the intra prediction modes of a current block and the above-described N intra prediction modes. In this case, the above-described intra prediction mode of the current block and the N intra prediction modes may be referred to as candidate modes. Here, N is an arbitrary positive integer.

First, a rate-distortion cost (RD cost) may be calculated for each candidate mode in the encoder.

Then, a transform kernel determination intra prediction mode may be derived as an intra prediction mode having a smallest distortion among candidate modes.

Then, information on the transform kernel determination intra prediction mode may be signaled to the decoder. Here, the information on the transform kernel determination intra prediction mode may include at least one of a flag regarding whether to use the transform kernel determination intra prediction mode, a transform set index, a transform kernel index, and an index regarding the transform kernel determination intra prediction mode.

Then, in the decoder, the transform set and/or the transform kernel of the current block may be determined based on the information on the transform kernel determination intra prediction mode.

Meanwhile, in the above-described example, a cost value is calculated as a rate-distortion cost, but this is only one example, and the cost value may be calculated by a predetermined cost function.

As still another example, the transform kernel determination intra prediction mode may be derived as an intra prediction mode having a smallest assigned prediction mode number among N intra prediction modes that are most accumulated in the HoC. Here, N is an arbitrary positive integer.

As yet another example, the transform kernel determination intra prediction mode may be derived as an intra prediction mode having a largest assigned prediction mode number among the N prediction modes that are most accumulated in the intra prediction modes of the HoC. Here, N is an arbitrary positive integer.

Meanwhile, in the above-described example, the N intra prediction modes are selected in the descending order of accumulation in the HoC, but the transform kernel determination intra prediction mode may be derived based on N intra prediction modes that are arbitrarily determined in the HoC.

Meanwhile, in the present specification, deriving a transform kernel determination intra prediction mode based on an HoC may have the same meaning as determining the transform kernel determination intra prediction mode based on the HoC.

As another example, when the amplitudes of an HoC are all equal to or less than a specific value, a transform kernel determination intra prediction mode of a current block may be determined as any one of a Planar mode and a DC mode. Alternatively, when the amplitudes of the HoC are all equal to or less than a specific value, the transform kernel determination intra prediction mode of the current block may be determined as a predetermined intra prediction mode.

Here, the specific value and the predetermined intra prediction mode may be determined by an agreement between an encoder and a decoder or may be determined by the encoder and may be transmitted to the decoder.

Meanwhile, a method of deriving a transform kernel determination intra prediction mode according to the present example may also be performed likewise when an intra prediction mode is derived to be used for intra prediction of a current block. In this case, the intra prediction mode used for the intra prediction may be identical to the intra prediction mode used for the transform set/kernel determination. Alternatively, the intra prediction mode used for the intra prediction may be derived independently of the intra prediction mode used for the transform set/kernel determination.

According to another example of the present disclosure, a transform kernel determination intra prediction mode may be derived using gradients of neighboring samples. Specifically, the transform kernel determination intra prediction mode is derived based on directional information of pixels included in the neighboring samples of a current block, and a transform kernel of the current block may be determined based on the derived transform kernel determination intra prediction mode. Here, the neighboring samples of the current block may mean samples included in a neighboring area of the current block.

Meanwhile, the directional information may mean information obtained by calculating gradients of pixels. Specifically, the directional information may mean information obtained by accumulating or processing gradient information that is calculated by applying a filter to the pixels.

First, gradients of pixels included in the neighboring samples of the current block may be calculated. In this case, the applied filter may be an edge detection filter such as a Sobel filter, a Roberts cross filter, a Prewitt filter, a Scharr filter, a Laplacian filter, or the like.

Then, a histogram of gradient may be generated based on the calculated gradients.

Meanwhile, not only all the pixels included in the neighboring samples of the current block but also gradients of only some pixels may be calculated. In this case, the histogram of gradient may be generated based on the gradients of only some pixels.

Then, the transform kernel determination intra prediction mode may be derived using the histogram of gradient.

As an example, a transform kernel determination intra prediction mode may be derived as an intra prediction mode corresponding to a directionality that is most accumulated in a histogram of gradient. Here, being most accumulated may mean having a largest amplitude in the histogram, and having the largest amplitude may mean having a largest value in the histogram.

As another example, a transform kernel determination intra prediction mode may be derived as any one of N prediction modes corresponding to the directionality that is most accumulated in the histogram of gradient and a prediction mode of the current block. In this case, the N prediction modes and the prediction mode of the current block may be referred to as candidate modes. Here, N is an arbitrary positive integer.

First, a RD cost may be calculated for each candidate mode in the encoder.

Then, the transform kernel determination intra prediction mode may be derived as an intra prediction mode having a smallest distortion among the candidate modes.

Then, information on the transform kernel determination intra prediction mode may be signaled to a decoder. Here, the information on the transform kernel determination intra prediction mode may include at least one of a flag regarding whether to use the transform kernel determination intra prediction mode, a transform set index, a transform kernel index, and an index regarding the transform kernel determination intra prediction mode.

Then, in the decoder, the transform set and/or the transform kernel of the current block may be determined based on the information on the transform kernel determination intra prediction mode.

Meanwhile, in the above-described example, the cost value is calculated as the RD cost, but this is only one example, and the cost value may be calculated by a predetermined cost function.

As another example, the transform kernel determination intra prediction mode may be derived as an intra prediction mode having a smallest assigned prediction mode number among N prediction modes corresponding to the directionality that is most accumulated in the histogram of gradient. Here, N is an arbitrary positive integer.

As another example, the transform kernel determination intra prediction mode may be derived as an intra prediction mode having a largest assigned prediction mode number among the N prediction modes corresponding to the directionality that is most accumulated in the histogram of gradient. Here, N is an arbitrary positive integer.

Meanwhile, in the present specification, deriving a transform kernel determination intra prediction mode using the gradients of neighboring samples may have the same meaning as determining the transform kernel determination intra prediction mode using the gradients of the neighboring samples.

As another example, when the amplitudes of a histogram of gradient are all equal to or less than a specific value, the transform kernel determination intra prediction mode of the current block may be determined as any one of a Planar mode and a DC mode. Alternatively, when the amplitudes of the histogram of gradient are all equal to or less than a specific value, the transform kernel determination intra prediction mode of the current block may be determined as a predetermined intra prediction mode. Here, the specific value and the predetermined intra prediction mode may be determined by an agreement between the encoder and the decoder, or may be determined by the encoder and transmitted to the decoder.

Meanwhile, according to another example of the present disclosure, a histogram of gradient may also be generated by a method based on a prediction mode of a neighboring block as follows. Here, the neighboring block may mean a block included in a neighboring area of a current block.

First, when the prediction mode of the neighboring block is any one of a decoder side intra mode derivation (DIMD) mode and a merged intra mode derivation (MIMD) mode, an amplitude value of a histogram of the mode may be accumulated in the histogram of gradient for determining a transform kernel of the current block.

For example, when the prediction mode of the neighboring block is the DIMD mode, a histogram of gradient may be generated based on a directionality of a reference sample of the neighboring block. Then, an amplitude value of the histogram of gradient of the mode may be accumulated in the histogram of gradient for determining the transform kernel of the current block. In this case, the amplitude value may be accumulated as it is in the histogram of gradient for determining the transform kernel of the current block, or may be normalized and accumulated.

As another example, when the prediction mode of the neighboring block is the MIMD mode, a merged histogram of gradients (MHog) for the mode may be generated. Specifically, the merged histogram of gradients may be generated by overlapping part or all of the amplitudes of the histogram of gradient according to the intra prediction mode of the reference sample of the neighboring block. Then, an amplitude value of the merged histogram of gradients may be accumulated in the histogram of gradient for determining the transform kernel of the current block. In this case, the amplitude value may be accumulated as it is in the histogram of gradient, or may be normalized and accumulated.

In addition, when the prediction mode of the neighboring block is neither the DIMD mode nor the MIMD mode, an amplitude value of the intra prediction mode of the neighboring block may be accumulated in the histogram of gradient. In this case, the amplitude value may be accumulated by a value calculated by multiplying the number of pixels included in the neighboring block by an arbitrary real number. Alternatively, the amplitude value may be accumulated by a value calculated by multiplying the number of pixels included in the current block by an arbitrary real number.

In addition, when the prediction mode of the neighboring block has two or more intra prediction modes such as an SGPM mode and a TIMD mode, an amplitude value of the intra prediction mode of the neighboring block may be accumulated in the histogram of gradient for determining the transform kernel of the current block. In this case, the amplitude value may be accumulated by a value calculated by multiplying the number of pixels included in the neighboring block by an arbitrary real number. Alternatively, the amplitude value may be accumulated by a value calculated by multiplying the number of pixels included in the current block by an arbitrary real number.

Meanwhile, the arbitrary real number may be determined by an agreement between the encoder and the decoder or may be determined by the encoder and may be signaled to the decoder.

As in the above-described method, when a histogram of gradient for determining a transform kernel is generated by accumulating amplitude values, a transform kernel determination intra prediction mode may be derived using the histogram of gradient.

Meanwhile, in the above-described method, a histogram of gradient for determining a transform kernel is generated by accumulating amplitude values, but the histogram of gradient may be generated by performing an operation of a predetermined method on the amplitude values. Here, the predetermined method may mean an averaging method or the like. Alternatively, a histogram of gradient may be generated by accumulating normalized amplitude values.

When a transform kernel determination intra prediction mode is derived, a transform kernel of a current block may be determined based on the derived transform kernel determination intra prediction mode. Then, a transform/inverse transform of the current block may be performed based on the determined transform kernel.

First, R intra prediction modes may be grouped and mapped to Q transform sets for each group. Herein, a method in which the R intra prediction modes are mapped to the transform sets may be determined by an agreement between the encoder and the decoder. As an example, it may be performed in the same manner as the LFNST and the NSPT. Here, R and Q are arbitrary positive integers.

Then, the transform set of the current block may be determined as a transform set mapped to the transform kernel determination intra prediction mode.

Then, the transform kernel of the current block may be determined as any one of transform kernels included in the determined transform set.

As an example, the transform kernel of the current block may be determined as a transform kernel having a smallest cost value among the transform kernels included in the determined transform set. Specifically, a RD cost may be calculated for each transform kernel in the encoder, and a kernel having a smallest distortion may be selected as an optimal transform kernel.

Then, information on the optimal transform kernel may be signaled to the decoder. Here, the information on the optimal transform kernel may be a flag when the number of transform kernels included in the transform set is two, and may be a kernel index when the number is three or more. In the decoder, a transform kernel may be determined based on the information, and an inverse transform may be performed based on the determined transform kernel.

Meanwhile, according to the above-described example, a transform kernel having a smallest cost value among transform kernels included in the transform set is determined as the transform kernel of the current block, but this is only one example, and the transform kernel of the current block may be determined as any one of the transform kernels included in the transform set determined by an arbitrary method. In this case, the arbitrary method may be determined by an agreement between the encoder and the decoder, or information on the determined transform kernel may be signaled.

Meanwhile, according to the above-described example, the transform set of the current block is determined as the transform set mapped to the transform kernel determination intra prediction mode, but this is only one example, and the transform set of the current block may be determined as any one of a transform set mapped to the intra prediction mode of the current block and a transform set mapped to the transform kernel determination intra prediction mode. That is, information on the intra prediction mode of the current block may be used.

In this case, the intra prediction mode of the current block and the transform kernel determination intra prediction mode may be referred to as candidate modes.

First, a RD cost may be calculated for each candidate mode in the encoder.

Then, the transform set of the current block may be determined as a transform set mapped to an intra prediction mode having a small distortion among the candidate modes.

In this case, information on the determined transform set may be signaled to the decoder. Here, the information on the determined transform set may include at least one of a flag regarding whether to use the transform kernel determination intra prediction mode, a transform set index, a transform kernel index, and an index regarding the transform kernel determination intra prediction mode.

Then, in the decoder, the transform set of the current block may be determined based on the information on the determined transform set.

Meanwhile, in the above-described example, a cost value is calculated as a RD cost, but this is only one example, and the cost value may be calculated by a predetermined cost function.

Meanwhile, according to the above-described examples, the transform kernel is determined after the transform set is determined, but the determination of the transform set and the transform kernel may be performed simultaneously.

According to another example of the present disclosure, S transform kernels may exist without a transform set. In this case, R intra prediction modes may be grouped and mapped to S transform kernels for each group. In addition, a method in which the R intra prediction modes are mapped to the transform kernels may be determined by an agreement between an encoder and a decoder. Here, R and S are arbitrary positive integers.

In addition, when a transform kernel determination intra prediction mode is derived, a transform kernel of a current block may be determined based on the derived transform kernel determination intra prediction mode. Specifically, the transform kernel of the current block may be determined as a transform kernel mapped to the transform kernel determination intra prediction mode.

Then, a transform/inverse transform of the current block may be performed based on the determined transform kernel.

Meanwhile, according to the above-described example, the transform kernel of the current block is determined as the transform kernel mapped to the transform kernel determination intra prediction mode, but this is only one example, and the transform kernel of the current block may be determined as any one of a transform kernel mapped to the intra prediction mode of the current block and a transform kernel mapped to the transform kernel determination intra prediction mode. That is, information on the intra prediction mode of the current block may be used.

In this case, the intra prediction mode of the current block and the transform kernel determination intra prediction mode may be referred to as candidate modes.

First, a RD cost may be calculated for each candidate mode in the encoder.

Then, the transform kernel of the current block may be determined as a transform kernel mapped to an intra prediction mode having a small distortion among the candidate modes.

In this case, information on the determined transform kernel may be signaled to the decoder. Here, the information on the determined transform set may include at least one of a flag regarding whether to use the transform kernel determination intra prediction mode, a transform set index, a transform kernel index, and an index regarding the transform kernel determination intra prediction mode.

Then, in the decoder, the transform kernel of the current block may be determined based on the information on the determined transform kernel.

Meanwhile, in the above-described example, a cost value is calculated as a RD cost, but this is only one example, and the cost value may be calculated by a predetermined cost function.

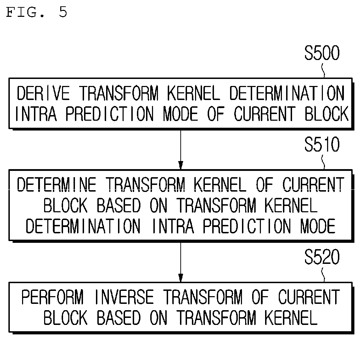

FIG. 5 is a flowchart for describing a method of determining a transform kernel according to an example of the present disclosure. The method of determining the transform kernel of FIG. 5 may be performed by an image decoding apparatus.

The image decoding apparatus may derive a transform kernel determination intra prediction mode of a current block (S500).

Meanwhile, the transform kernel determination intra prediction mode may be derived using an HoC that is generated based on an intra prediction mode of a neighboring block of the current block.

Meanwhile, the HoC may be generated by accumulating the intra prediction mode of the neighboring block.

Meanwhile, the transform kernel determination intra prediction mode may be derived as an intra prediction mode having a maximum value in the HoC.

Meanwhile, the transform kernel determination intra prediction mode may be derived using a predefined number of intra prediction modes among the intra prediction modes of the HoC.

Meanwhile, the HoC may be generated by accumulating the intra prediction mode of the neighboring block.

Meanwhile, the intra prediction mode of the neighboring block may be accumulated in the HoC based on a size of the neighboring block.

In addition, the image decoding apparatus may determine the transform kernel of the current block based on the transform kernel determination intra prediction mode (S510).

Meanwhile, the determining of the transform kernel of the current block may include determining a transform set of the current block based on the transform kernel determination intra prediction mode and determining the transform kernel of the current block among transform kernels included in the transform set.

Meanwhile, the determining of the transform set and the determining of the transform kernel among the transform kernels included in the transform set may be performed simultaneously.

Meanwhile, the transform set may be a transform set of a non-separable transform.

Meanwhile, the non-separable transform may include a non-separable primary transform and a non-separable secondary transform.

Meanwhile, the neighboring block may include a block spatially adjacent to the current block and a block not spatially adjacent to the current block.

Meanwhile, the block not spatially adjacent to the current block may be included in at least one of a left region of the current block, an upper region of the current block, and an upper-left region of the current block.

In addition, the image decoding apparatus may perform inverse transform of the current block based on the transform kernel (S520).

Meanwhile, the steps described in FIG. 5 may be performed in the same manner in an image encoding method. In addition, a bitstream may be generated by an image encoding method including the steps described in FIG. 5. The bitstream may be stored in a non-transitory computer-readable recording medium and may also be transmitted (or streamed).

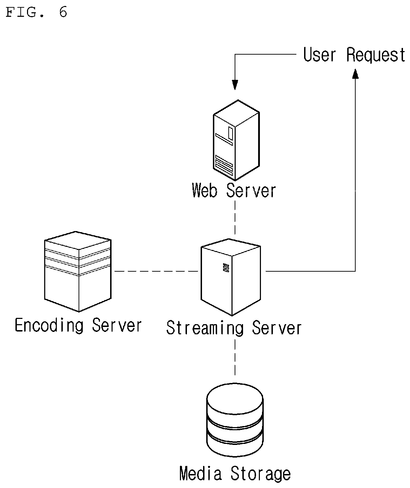

FIG. 6 exemplarily illustrates a content streaming system to which an example according to the present disclosure is applicable.

As illustrated in FIG. 6, a content streaming system to which an example of the present disclosure is applied may largely include an encoding server, a streaming server, a web server, a media storage, a user device, and a multimedia input device.

The encoding server compresses content received from multimedia input devices such as smartphones, cameras, CCTVs, etc. into digital data to generate a bitstream and transmits it to the streaming server. As another example, if multimedia input devices such as smartphones, cameras, CCTVs, etc. directly generate a bitstream, the encoding server may be omitted.

The bitstream may be generated by an image encoding method and/or an image encoding apparatus to which an example of the present disclosure is applied, and the streaming server may temporarily store the bitstream in the process of transmitting or receiving the bitstream.

The streaming server transmits multimedia data to a user device based on a user request via a web server, and the web server may act as an intermediary that informs the user of any available services. When a user requests a desired service from the web server, the web server transmits it to the streaming server, and the streaming server may transmit multimedia data to the user. At this time, the content streaming system may include a separate control server, and in this case, the control server may control commands/responses between devices within the content streaming system.

The streaming server may receive content from media storage and/or an encoding server. For example, when receiving content from the encoding server, the content may be received in real time. In this case, in order to provide a smooth streaming service, the streaming server may store the bitstream for a certain period of time.

Examples of the user devices may include mobile phones, smartphones, laptop computers, digital broadcasting terminals, personal digital assistants (PDAs), portable multimedia players (PMPs), navigation devices, slate PCs, tablet PCs, ultrabooks, wearable devices (e.g., smartwatches, smart glasses, HMDs), digital TVs, desktop computers, digital signage, etc.

Each server in the above content streaming system may be operated as a distributed server, in which case data received from each server may be distributed and processed.

The above examples may be performed in the same or corresponding manner in the encoding apparatus and the decoding apparatus. In addition, an image may be encoded/decoded using at least one or a combination of at least one of the above examples.

The order in which the above examples are applied may be different in the encoding apparatus and the decoding apparatus. Alternatively, the order in which the above examples are applied may be the same in the encoding apparatus and the decoding apparatus.

The above examples may be performed for each of the luma and chroma signals. Alternatively, the above examples for the luma and chroma signals may be performed identically.

In the above-described examples, the methods are described based on the flowcharts with a series of steps or units, but the present disclosure is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present disclosure.

The examples may be implemented in a form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present disclosure, or well-known to a person of ordinary skill in the computer software technology field.

A bitstream generated by the encoding method according to the above example may be stored in a non-transitory computer-readable recording medium. In addition, a bitstream stored in the non-transitory computer-readable recording medium may be decoded by the decoding method according to the above example.

Examples of the computer-readable recording medium include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory

(RAM), flash memory, etc., which are particularly structured to store and implement the program instruction. Examples of the program instructions include not only a mechanical language code formatted by a compiler but also a high-level language code that may be implemented by a computer using an interpreter. The hardware devices may be configured to be operated by one or more software modules or vice versa to conduct the processes according to the present disclosure.

Although the present disclosure has been described in terms of specific items such as detailed elements as well as the limited examples and the drawings, they are only provided to help more general understanding of the present disclosure, and the present disclosure is not limited to the above examples. It will be appreciated by those skilled in the art to which the present disclosure pertains that various modifications and changes may be made from the above description.

Therefore, the spirit of the present disclosure shall not be limited to the above-described examples, and the entire scope of the appended claims and their equivalents will fall within the scope and spirit of the present disclosure.

### Industrial Applicability

The present disclosure may be used in an apparatus for encoding/decoding an image and a recording medium for storing a bitstream.

## Claims

1. An image decoding method comprising:
deriving a transform kernel determination intra prediction mode of a current block;
determining a transform kernel of the current block based on the transform kernel determination intra prediction mode; and
performing inverse transform of the current block based on the transform kernel,
wherein the transform kernel determination intra prediction mode is derived using a histogram of occurrence (HoC) that is generated based on an intra prediction mode of a neighboring block of the current block, and
wherein the HoC is generated by accumulating the intra prediction mode of the neighboring block.

2. The image decoding method of claim 1, wherein the transform kernel determination intra prediction mode is derived as an intra prediction mode having a maximum value in the HoC.

3. The image decoding method of claim 1, wherein the transform kernel determination intra prediction mode is derived using a predefined number of intra prediction modes among intra prediction modes of the HoC.

4. The image decoding method of claim 1, wherein the intra prediction mode of the neighboring block is accumulated in the HoC based on a size of the neighboring block.

5. The image decoding method of claim 1, wherein the determining of the transform kernel of the current block comprises:
determining a transform set of the current block based on the transform kernel determination intra prediction mode; and
determining the transform kernel of the current block among transform kernels included in the transform set.

6. The image decoding method of claim 5, wherein the determining of the transform set and the determining of the transform kernel among the transform kernels included in the transform set are performed simultaneously.

7. The image decoding method of claim 5, wherein the transform set is a transform set of a non-separable transform.

8. The image decoding method of claim 7, wherein the non-separable transform is any one of a non-separable primary transform and a non-separable secondary transform.

9. The image decoding method of claim 1, wherein the neighboring block includes a block spatially adjacent to the current block and a block not spatially adjacent to the current block.

10. The image decoding method of claim 9, wherein the block not spatially adjacent to the current block is included in at least one of a left region of the current block, an upper region of the current block, and an upper-left region of the current block.

11. An image encoding method comprising:
deriving a transform kernel determination intra prediction mode of a current block;
determining a transform kernel of the current block based on the transform kernel determination intra prediction mode; and
performing transform of the current block based on the transform kernel,
wherein the transform kernel determination intra prediction mode is derived using a histogram of occurrence (HoC) that is generated based on an intra prediction mode of a neighboring block of the current block, and
wherein the HoC is generated by accumulating the intra prediction mode of the neighboring block.

12. A non-transitory computer-readable recording medium storing a bitstream generated by an image encoding method,
wherein the image encoding method comprises:
deriving a transform kernel determination intra prediction mode of a current block;
determining a transform kernel of the current block based on the transform kernel determination intra prediction mode; and
performing transform of the current block based on the transform kernel,
wherein the transform kernel determination intra prediction mode is derived using a histogram of occurrence (HoC) that is generated based on an intra prediction mode of a neighboring block of the current block, and
wherein the HoC is generated by accumulating the intra prediction mode of the neighboring block.

13. A method of transmitting a bitstream generated by an image encoding method,
wherein the transmission method comprises transmitting the bitstream,
wherein the image encoding method comprises:
deriving a transform kernel determination intra prediction mode of a current block;
determining a transform kernel of the current block based on the transform kernel determination intra prediction mode; and
performing transform of the current block based on the transform kernel,
wherein the transform kernel determination intra prediction mode is derived using a histogram of occurrence (HoC) that is generated based on an intra prediction mode of a neighboring block of the current block, and
wherein the HoC is generated by accumulating the intra prediction mode of the neighboring block.
